# FASCICULE DE BREVET EUROPEEN

(11) **EP 3 259 123 B1**
(45) Date de publication et mention de la délivrance du brevet: **12.12.2018**
(21) Numéro de dépôt: 16707885.6
(22) Date de dépôt: 09.02.2016
(51) Int. Cl.: B29D 99/00, B29C 70/54, B29C 70/24, B29B 11/16, F01D 5/28, F01D 11/00

(54) **PROCÉDÉ DE FABRICATION D'UNE AUBE DE TURBOMACHINE EN MATÉRIAU COMPOSITE**
VERFAHREN ZUR HERSTELLUNG EINER AUS EINEM VERBUNDSTOFFMATERIAL HERGESTELLTEN TURBOMASCHINENSCHAUFEL
METHOD FOR MANUFACTURING A TURBOMACHINE BLADE MADE OF COMPOSITE MATERIAL

(30) Priorité: 16.02.2015 FR 1551258
(43) Date de publication de la demande: 27.12.2017
(73) Titulaire: SAFRAN AIRCRAFT ENGINES, 75015 Paris (FR)
(72) Inventeur: MARSAL, David, 33240 Saint Andre De Cubzac (FR); ROUSSILLE, Clément, 33200 Bordeaux (FR); BLACHIER, Jeremy, 33000 Bordeaux (FR)
(74) Mandataire: Laïk, Eric
(86) Numéro de dépôt international: PCT/FR2016/050281
(87) Numéro de publication internationale: WO 2016/132042

(56) Documents cités:
- EP-A1- 2 500 548
- WO-A1-2012/001279
- WO-A1-2014/076408
- WO-A1-2014/087093

## Description

### Arrière-plan de l'invention

L'invention concerne un procédé de fabrication d'une aube de turbomachine en matériau composite.

Il est connu de mettre en oeuvre dans les turbomachines des aubes mobiles formées d'un matériau métallique. Il est souhaitable de remplacer ces aubes en matériau métallique par des aubes formées d'un matériau composite afin réduire le poids des turbomachines. Un tel remplacement est d'autant plus avantageux que certains matériaux composites comme les matériaux composites à matrice céramique sont compatibles avec une exposition à une température de fonctionnement accrue, permettant ainsi d'améliorer les performances du moteur.

Actuellement, les aubes mobiles en matériau métallique peuvent être réalisées par un procédé de moulage dans lequel la surface supérieure (talon) et la surface inférieure (plateforme) sont moulées en même temps que la pale et le pied de l'aube.

Les inventeurs ont cherché à remplacer une aube en matériau métallique par une aube en matériau composite présentant un renfort fibreux formé en une seule pièce par tissage. Toutefois, la réalisation d'une aube présentant l'ensemble des fonctions secondaires requises à partir d'une seule préforme textile présente un certain nombre de problèmes du fait notamment des difficultés rencontrées pour réaliser et mettre en forme la préforme textile.

On connait en outre le document WO 2012/001279 qui décrit une aube à longeron composite intégré et le document WO 2014/076408 qui décrit une préforme fibreuse pour une aube de turbomachine obtenue par tissage tridimensionnel monobloc.

Il existe donc un besoin pour disposer de nouveaux procédés permettant de fabriquer de manière simple une aube de turbomachine en matériau composite présentant les propriétés souhaitées.

### Objet et résumé de l'invention

A cet effet, l'invention propose un procédé de fabrication d'une aube de turbomachine en matériau composite comprenant un renfort fibreux densifié par une matrice, le procédé comprenant :
- la réalisation d'un tissage multicouche afin d'obtenir une première préforme fibreuse en une seule pièce, ladite première préforme comprenant une première partie formant préforme de pied d'aube et prolongée par une deuxième partie présentant une épaisseur inférieure à l'épaisseur de la première partie, ladite deuxième partie formant préforme de tenon,
- la réalisation d'un tissage multicouche afin d'obtenir une deuxième préforme fibreuse en une seule pièce, ladite deuxième préforme comprenant une première partie formée de deux peaux délimitant entre elles un logement interne, ladite première partie formant préforme de pale, et au moins une deuxième partie s'étendant depuis la surface externe desdites peaux, ladite au moins deuxième partie formant préforme de plateforme,
- l'assemblage de la première préforme à l'état consolidé ou non consolidé avec la deuxième préforme à l'état non consolidé par engagement de la deuxième partie de la première préforme dans le logement interne de la première partie de la deuxième préforme, et
- la co-densification des première et deuxième préformes ainsi assemblées afin d'obtenir une aube de turbomachine.

Sauf mention contraire, l'épaisseur d'une partie correspond à la plus petite dimension transversale de cette partie.

Une préforme est dite à l'état consolidé lorsqu'elle a subi une étape de consolidation durant laquelle sa porosité initiale a été partiellement comblée par un dépôt d'une phase de consolidation, cette préforme à l'état consolidé conservant une porosité résiduelle laquelle peut être en tout ou partie comblée lors de l'étape de co-densification ultérieure. Divers exemples de méthodes de consolidation sont détaillés dans la suite. Une préforme est dite à l'état non consolidé lorsqu'elle est dépourvue d'une telle phase de consolidation. Une préforme à l'état non consolidé peut être à l'état sec ou être imprégnée par un précurseur d'un matériau d'une phase de consolidation, la consolidation n'étant dans ce dernier cas pas finalisée du fait de la non-transformation du précurseur en une phase de consolidation.

L'invention repose sur le fait de fabriquer séparément une première et une deuxième préformes supportant chacune un nombre limité de fonctions de sorte à les rendre toutes deux facilement formables et d'assembler ces deux préformes afin de former la préforme constituant le renfort fibreux de l'aube à fabriquer. En séparant les fonctions de l'aube sur deux préformes fibreuses, il devient possible de simplifier la définition textile de chacune des première et deuxième préformes ainsi que de faciliter leur mise en forme éventuelle.

Ainsi, par rapport au cas où l'aube est fabriquée à partir d'une préforme fibreuse en une seule pièce, l'invention permet de significativement simplifier le procédé de fabrication de l'aube. En outre, la deuxième préforme fibreuse reprend les extremums d'effort au niveau des bords d'attaque et de fuite, et par exemple au niveau de la plateforme de veine de pied. Cette plateforme étant textilement liée aux peaux formant préforme de pale sa résistance mécanique est améliorée ce qui confère ainsi de bonnes propriétés mécaniques à l'aube fabriquée.

La première préforme peut avantageusement constituer exclusivement une préforme de pied d'aube ainsi qu'une préforme de tenon. La partie de pied d'aube constitue en soi une partie soumise à des contraintes dimensionnelles particulièrement exigeantes et il est donc particulièrement avantageux qu'une préforme, en l'occurrence la première préforme, soit destinée quasi-exclusivement à la réalisation de la partie de pied d'aube dont la réalisation est relativement difficile.

L'aube ainsi fabriquée peut être utilisée dans une turbine ou dans un compresseur de turbomachine.

Dans un exemple de réalisation, une fois les première et deuxième préformes assemblées, la deuxième préforme peut ne pas s'étendre le long de la première partie de la première préforme formant préforme de pied d'aube. En variante, une fois les première et deuxième préformes assemblées, la deuxième préforme peut s'étendre le long de tout ou partie de la première partie de la première préforme formant préforme de pied d'aube.

Comme il va être détaillé plus bas, les première et deuxième préformes ne sont pas nécessairement au même stade de leurs gammes respectives lors de l'assemblage.

Dans un exemple de réalisation, la première préforme peut être consolidée avant l'étape d'assemblage et la première préforme à l'état consolidé peut être assemblée avec la deuxième préforme à l'état non consolidé lors de l'étape d'assemblage.

En variante, la première préforme à l'état non consolidé peut être assemblée avec la deuxième préforme à l'état non consolidé lors de l'étape d'assemblage.

Dans un exemple de réalisation, ladite au moins deuxième partie de la deuxième préforme formant préforme de plateforme peut être réalisée par tissage de deux ensembles de couches de fils traversant chacun respectivement une des peaux de la première partie de la deuxième préforme formant préforme de pale.

En variante, ladite au moins deuxième partie de la deuxième préforme formant préforme de plateforme peut être réalisée par tissage de surlongueurs dans la partie inférieure de la première partie de ladite deuxième préforme formant préforme de pale.

Dans un exemple de réalisation, le procédé peut comprendre, après l'étape de co-densification des première et deuxième préformes, une étape d'usinage de la préforme de pale de manière à réduire l'épaisseur des peaux.

Dans un exemple de réalisation, la première préforme peut être obtenue après tissage multicouche d'une pluralité de fils de fibres de carbone et la deuxième préforme peut être obtenue après tissage multicouche d'une pluralité de fils de carbure de silicium. Dans ce cas, la première préforme peut être consolidée par une phase de consolidation à base de carbone avant l'étape d'assemblage et la première préforme ainsi consolidée peut être assemblée avec la deuxième préforme à l'état non consolidé lors de l'étape d'assemblage.

Dans un exemple de réalisation, la co-densification des première et deuxième préformes peut être réalisée par mise en oeuvre de l'un au moins des procédés suivants : infiltration chimique en phase vapeur, densification par voie liquide et procédé d'infiltration à l'état fondu.

Dans un exemple de réalisation, le procédé peut comprendre, après l'étape d'assemblage des première et deuxième préformes fibreuses et avant la co-densification, une étape de renforcement de l'assemblage consistant à introduire ou former des liaisons mécaniques entre les première et deuxième préformes au niveau de leurs portions assemblées.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 représente un exemple d'ensemble de première et deuxième préformes fibreuses avant et après assemblage dans le cadre d'un procédé selon l'invention,
- la figure 2 représente un autre exemple de structure pouvant être obtenue par assemblage de première et deuxième préformes fibreuses dans le cadre d'un procédé selon l'invention,
- la figure 3 représente un détail de la structure illustrée à la figure 2,
- la figure 4 est une vue partielle en coupe de la figure 3 au niveau de la zone de traversée,
- la figure 5 représente un autre exemple de structure pouvant être obtenue par assemblage de première et deuxième préformes fibreuses dans le cadre d'un procédé selon l'invention,
- les figures 6 et 7 sont des ordinogrammes détaillant les différentes étapes de mise en oeuvre d'exemples de procédés selon l'invention,
- la figure 8 est une vue en perspective d'une aube de turbomachine fabriquée par un procédé selon l'invention, et
- la figure 9 est une vue en perspective d'une roue de turbomachine équipée d'une pluralité d'aubes fabriquées par mise en oeuvre du procédé selon l'invention.

### Description détaillée de modes de réalisation

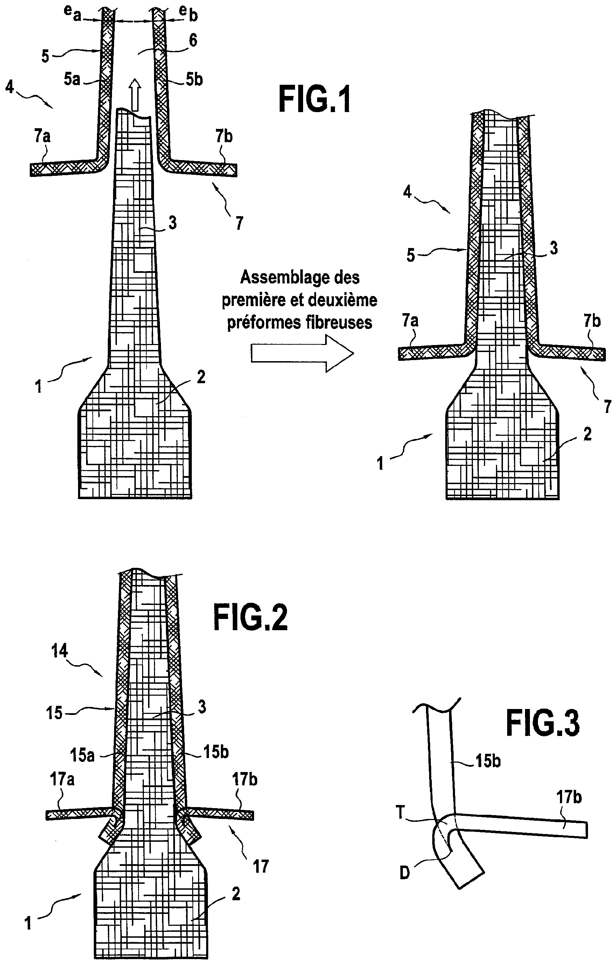

On a représenté à la figure 1 un premier exemple d'ensemble de première et deuxième préformes fibreuses 1 et 4. La première préforme fibreuse 1 est constituée d'une seule pièce obtenue par tissage multicouche et comprend une première partie 2 formant préforme de pied d'aube prolongée par une deuxième partie 3 présentant une épaisseur inférieure à l'épaisseur de la première partie 2, ladite deuxième partie 3 formant préforme de tenon. La deuxième préforme fibreuse 4 est constituée d'une seule pièce obtenue par tissage multicouche et comprend une première partie 5 formée de deux peaux 5a et 5b délimitant entre elles un logement interne 6, ladite première partie 5 formant préforme de pale, et une deuxième partie 7 s'étendant depuis la surface externe desdites peaux 5a et 5b, ladite deuxième partie 7 formant préforme de plateforme. Dans l'exemple illustré à la figure 1, la deuxième partie 7 de la deuxième préforme 4 formant préforme de plateforme est réalisée par tissage de surlongueurs 7a et 7b dans la partie inférieure de la première partie 5 de la deuxième préforme 4 formant préforme de pale. Indépendamment du mode de réalisation envisagé et comme illustré à la figure 1, l'épaisseur eₐ de la première peau 5a et/ou l'épaisseur e_{b} de la deuxième peau 5b peut être sensiblement constante le long de tout ou partie de la première partie 5 de la deuxième préforme 4 formant préforme de pale.

Une fois les première 1 et deuxième 4 préformes fibreuses obtenues, celles-ci sont ensuite assemblées par engagement de la deuxième partie 3 de la première préforme 1 dans le logement interne 6 de la première partie 5 de la deuxième préforme 4, le sens d'assemblage étant illustré par une flèche à la figure 1. Comme il sera détaillé plus bas, la première préforme fibreuse 1 peut ou non être à l'état consolidé lors de l'assemblage. Dans l'exemple illustré, une fois les première 1 et deuxième 4 préformes assemblées, la deuxième préforme 4 ne s'étend pas le long de la première partie 2 de la première préforme 1 formant préforme de pied d'aube. En d'autres termes, dans l'exemple illustré, une fois les première 1 et deuxième 4 préformes assemblées, la première partie 2 de la première préforme 1 formant préforme de pied d'aube n'est pas logée dans le logement interne 6 de la deuxième préforme 4.

La structure obtenue après assemblage illustrée à la figure 2 diffère de celle illustrée à la figure 1 dans la mesure où la deuxième partie 17 de la deuxième préforme 14 formant préforme de plateforme est réalisée par tissage de deux ensembles de couches de fils 17a et 17b traversant chacun respectivement une des peaux 15a ou 15b de la première partie 15 de la deuxième préforme 14 formant préforme de pale. Comme dans l'exemple de la figure 1, une fois les première 1 et deuxième 14 préformes assemblées, la deuxième préforme 14 ne s'étend pas le long de la première partie 2 de la première préforme 1 formant préforme de pied d'aube.

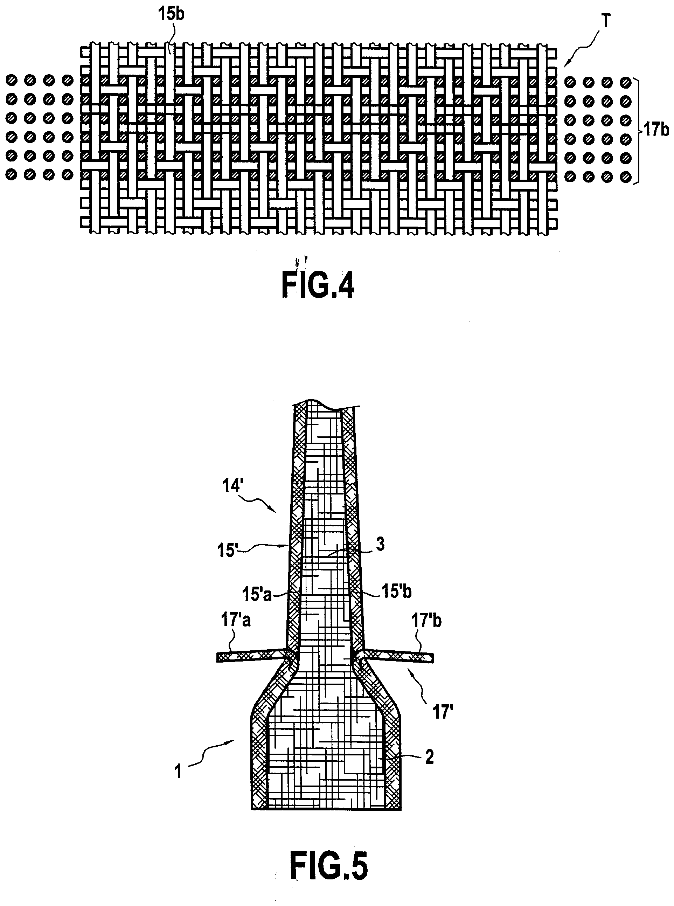

On a représenté à la figure 3 un détail de la structure représentée à la figure 2. Pour réaliser la préforme de plateforme, on réalise une déliaison au niveau du point de déliaison D afin de permettre la séparation d'un ensemble de couches de fils 17b formant une partie de la plateforme d'un ensemble de couches de fils formant une des peaux 15b de la première partie 15 de la deuxième préforme 14. L'ensemble de couches de fils 17b et l'ensemble de couches de fils formant une des peaux 15b ne sont pas liés mutuellement au niveau de la zone de déliaison. Comme illustré à la figure 3, l'ensemble de couches de fils 17b traverse la peau 15b au niveau d'une zone de traversée T. Une vue en coupe au niveau de la zone de traversée T est donnée à la figure 4. Les mêmes caractéristiques s'appliquent à l'ensemble de couches de fils 17a formant une partie de la plateforme et à l'ensemble de couches de fils formant la peau 15a.

On a représenté à la figure 5 une variante de réalisation ne différant de l'exemple illustré à la figure 2 qu'en ce que, une fois les première 1 et deuxième 14' préformes assemblées, la deuxième préforme 14' s'étend le long de l'intégralité de la première partie 2 de la première préforme 1 formant préforme de pied d'aube. Dans ce cas, la première partie 2 de la première préforme 1 est entièrement logée dans le logement interne de la deuxième préforme 14'. La numérotation des éléments de la deuxième préforme 14' de la figure 5 correspond à celle de la figure 2 à laquelle un « ' » a été rajouté. Les détails donnés aux figures 3 et 4 sont valables pour l'exemple de réalisation de la figure 5.

Quel que soit le mode de réalisation envisagé, il est possible de former dans le cadre d'un procédé selon l'invention une pluralité de plateformes ainsi qu'éventuellement des murets et becquets. On peut, en particulier, obtenir après mise en oeuvre d'un procédé selon l'invention une aube de turbomachine comportant une première plateforme située du côté du pied d'aube ainsi qu'une deuxième plateforme formant un talon d'aube.

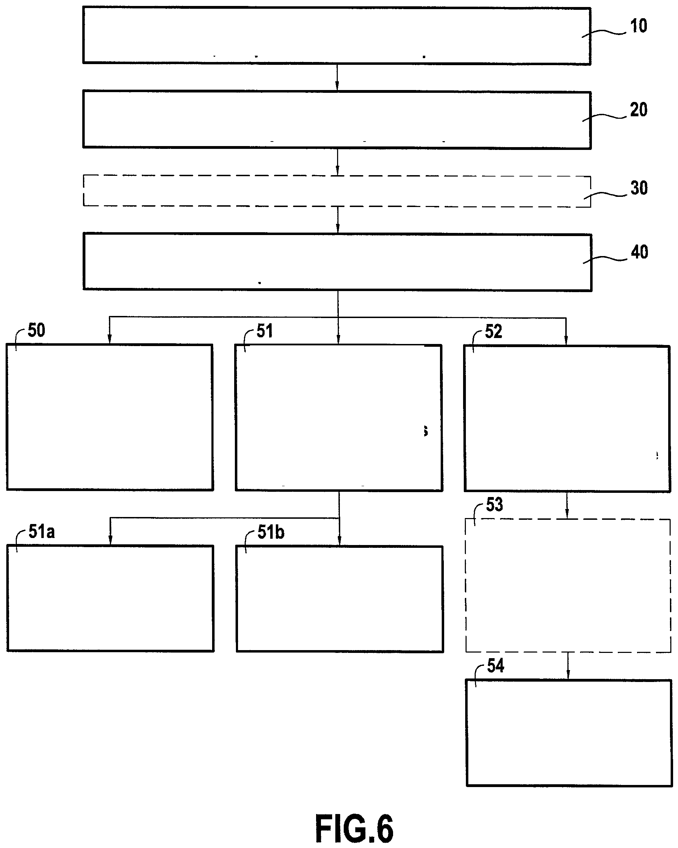

Il va à présent être décrit des exemples de procédés selon l'invention. La description ci-dessous concerne l'exemple de procédé selon l'invention illustré à la figure 6.

Dans un premier temps, les première et deuxième préformes fibreuses sont chacune réalisées par tissage multicouche entre une pluralité de couches de fils de chaîne et une pluralité de couches de fils de trame, éventuellement suivi d'une étape de mise en forme (étape 10). On ne sort pas du cadre de l'invention lorsque la première préforme fibreuse est obtenue après un tissage multicouche entre une pluralité de couches de fils de chaîne et une pluralité de couches de fils de trame et la deuxième préforme fibreuse est obtenue après la réalisation d'un tressage.

Le tissage multicouche réalisé peut être notamment un tissage à armure "interlock", c'est-à-dire une armure de tissage dans laquelle chaque couche de fils de trame lie plusieurs couches de fils de chaîne avec tous les fils d'une même colonne de trame ayant le même mouvement dans le plan de l'armure. D'autres types de tissage multicouche pourront être utilisés. Différents modes de tissage multicouche utilisables sont notamment décrits dans le document WO 2006/136755.

Le tissage peut être réalisé avec des fils de chaîne s'étendant dans la direction longitudinale des préformes, étant noté qu'un tissage avec des fils de trame dans cette direction est également possible.

Dans un exemple de réalisation, les première et deuxième préformes fibreuses peuvent chacune comporter des, notamment être formées de, fils de carbone. En variante, la première préforme fibreuse peut comporter des, notamment être formée de, fils de carbone et la deuxième préforme fibreuse peut comporter des, notamment être formée de, fils céramiques tels que des fils de carbure de silicium. En variante encore, les première et deuxième préformes fibreuses peuvent chacune comporter des, notamment être formées de, fils céramiques tels que des fils de carbure de silicium.

Ainsi, dans un exemple de réalisation, les fils utilisés peuvent être des fils de carbure de silicium (SiC) fournis sous la dénomination "Nicalon", « Hi-Nicalon » ou « Hi-Nicalon-S » par la société japonaise Nippon Carbon ou « Tyranno SA3 » par la société UBE et ayant par exemple un titre (nombre de filaments) de 0,5K (500 filaments).

La première préforme fibreuse est ensuite consolidée par dépôt d'une phase de consolidation dans la porosité de la première préforme fibreuse, cette phase de consolidation étant déposée par voie gazeuse ou par voie liquide de façon connue en soi (étape 20).

Le procédé par voie liquide consiste à imprégner la préforme par une composition liquide contenant un précurseur du matériau de la phase de consolidation. Le précurseur se présente habituellement sous forme d'un polymère, tel qu'une résine, éventuellement dilué dans un solvant. La préforme est placée dans un moule pouvant être fermé de manière étanche. Ensuite, on referme le moule et on injecte le précurseur liquide de phase de consolidation (par exemple une résine) dans le moule afin d'imprégner la préforme.

La transformation du précurseur en phase de consolidation est réalisée par traitement thermique, généralement par chauffage du moule, après élimination du solvant éventuel et réticulation du polymère.

Dans le cas de la formation d'une phase de consolidation en matériau céramique, le traitement thermique comporte une étape de pyrolyse du précurseur pour former la phase de consolidation en matériau céramique. A titre d'exemple, des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir à la consolidation souhaitée.

Dans le procédé par voie gazeuse (infiltration chimique en phase vapeur de la phase de consolidation ; procédé « CVI »), la préforme fibreuse est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la phase de consolidation par dépôt, au coeur du matériau au contact des fibres, d'un matériau solide résultant d'une décomposition d'un constituant de la phase gazeuse ou d'une réaction entre plusieurs constituants.

La formation d'une phase de consolidation SiC peut être obtenue avec du méthyltrichlorosilane (MTS) donnant du SiC par décomposition du MTS.

Une fois la première préforme fibreuse consolidée, celle-ci peut éventuellement être mise en forme par exemple par usinage (étape 30 optionnelle).

La première préforme fibreuse à l'état consolidé est ensuite assemblée avec la deuxième préforme fibreuse à l'état non consolidé par engagement de la deuxième partie de la première préforme dans le logement interne de la première partie de la deuxième préforme (étape 40). Une fois les première et deuxième préformes assemblées, on peut éventuellement réaliser une étape de mise en forme par exemple par moulage avec déformation notamment afin de reproduire le profil incurvé de la pale de l'aube, la première préforme constituant dans ce cas un contre-moule pour la deuxième préforme.

Une co-densification des première et deuxième préformes ainsi assemblées est ensuite réalisée.

Dans un exemple de réalisation, la co-densification peut être réalisée par un procédé d'infiltration à l'état fondu (étape 50).

Dans ce procédé, il y a tout d'abord introduction, dans la porosité des première et deuxième préformes assemblées, de charges, par exemple de charges réactives les charges étant par exemple choisies parmi SiC, Si₃N₄, C, B, et leurs mélanges. L'introduction des charges peut, par exemple, être effectuée par voie barbotine (« Slurry cast »), par aspiration de poudres sub-microniques (APS) ou par un procédé d'injection du type procédé de moulage par injection de résine (« Resin Transfer Molding » ou « RTM ») dans lequel un traitement thermique est effectué après l'injection pour faire évaporer le milieu liquide.

Une fois les charges introduites, les première et deuxième préformes sont ensuite infiltrées avec une composition d'infiltration à l'état fondu comportant par exemple du silicium afin de former une matrice et obtenir ainsi l'aube de turbomachine. La composition d'infiltration peut être constituée de silicium fondu ou en variante être sous la forme d'un alliage fondu de silicium et d'un ou plusieurs autres constituants. Le(s) constituant(s) présent(s) au sein de l'alliage de silicium peuvent être choisi(s) parmi B, Al, Mo, Ti, et leurs mélanges.

Lorsque des charges réactives sont utilisées, sensiblement l'intégralité des charges réactives peut être consommée durant la réaction entre la composition d'infiltration et les charges réactives. En variante, seule une partie des charges réactives est consommée durant cette réaction.

Dans un exemple de réalisation, l'infiltration à l'état fondu réalisée peut permettre l'obtention d'une matrice par réaction entre des charges solides, par exemple de type C, SiC ou Si₃N₄ introduites par voie barbotine ou pré-imprégnées, et un alliage fondu à base de silicium. La réaction peut se produire à une température supérieure ou égale à 1420°C. Compte tenu des températures élevées mises en oeuvre, il peut être avantageux qu'une partie au moins des première et deuxième préformes soit constituée de fibres thermostables, par exemple de type Hi-Nicalon voire Hi-Nicalon S.

Les fils des première et deuxième préformes peuvent, avant infiltration de la composition d'infiltration, avoir été revêtus d'une couche d'interphase, par exemple en BN ou BN dopé par du silicium, ainsi que d'une couche de carbure, par exemple en SiC et/ou Si₃N₄, par exemple réalisée par voie gazeuse.

En variante, on peut tout d'abord réaliser une première étape de co-densification des première et deuxième préformes assemblées par densification par voie liquide (étape 51), ce type de procédé étant tel que décrit plus haut relativement à l'étape de consolidation de la première préforme fibreuse. L'étape 51 peut alors être suivie d'une deuxième étape de co-densification par infiltration chimique en phase vapeur (étape 51a) (ce type de procédé étant tel que décrit plus haut relativement à l'étape de consolidation de la première préforme fibreuse) ou par infiltration à l'état fondu (étape 51b). La deuxième étape de co-densification est réalisée afin de combler tout ou partie de la porosité résiduelle résultant après mise en oeuvre de la première étape de co-densification. Une co-densification combinant voie liquide et voie gazeuse peut avantageusement permettre de faciliter la mise en oeuvre, limiter les coûts et les cycles de fabrication tout en obtenant des caractéristiques satisfaisantes pour l'utilisation envisagée.

En variante encore, on peut tout d'abord réaliser une première étape de co-densification des première et deuxième préformes assemblées par infiltration chimique en phase vapeur (étape 52). L'étape 52 peut être suivie d'une étape de mise en forme par exemple par usinage (étape 53 optionnelle). On peut ensuite réaliser une deuxième étape de co-densification par un procédé d'infiltration à l'état fondu (étape 54).

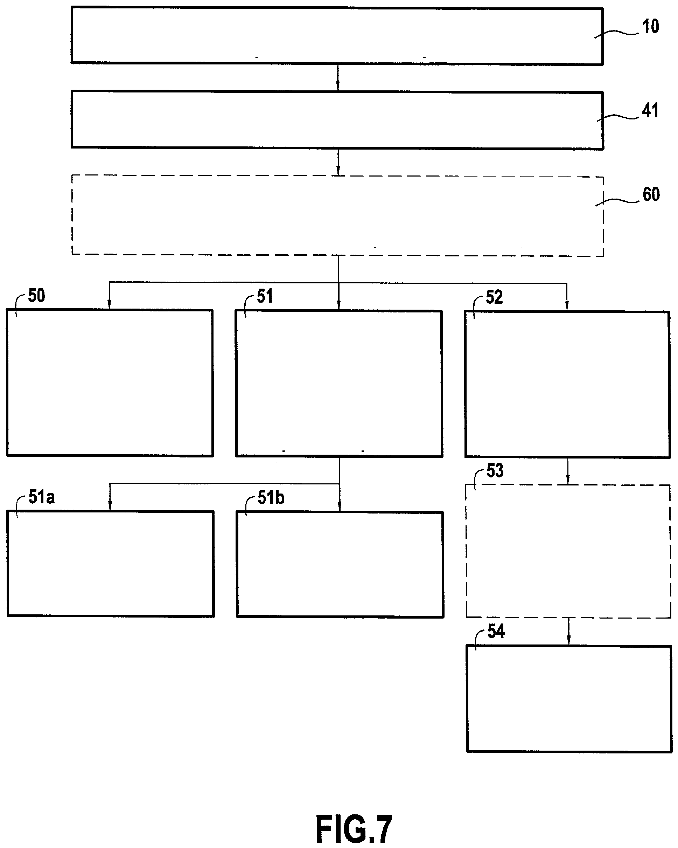

Il va, à présent, être décrit une variante de procédé selon l'invention en lien avec la figure 7. Dans un premier temps, une étape 10 telle que décrite plus haut est réalisée. La première préforme fibreuse à l'état non consolidé est ensuite assemblée avec la deuxième préforme fibreuse à l'état non consolidé par engagement de la deuxième partie de la première préforme dans le logement interne de la première partie de la deuxième préforme (étape 41). Une fois les première et deuxième préformes assemblées, on peut éventuellement réaliser une étape de mise en forme par exemple par moulage avec déformation notamment afin de reproduire le profil incurvé de la pale de l'aube. On peut ensuite réaliser une étape de renforcement de l'assemblage par introduction ou formation de liaisons mécaniques entre les première et deuxième préformes au niveau de leurs portions assemblées (étape 60 optionnelle). Cette étape de renforcement de l'assemblage peut, par exemple, être réalisée par aiguilletage si les fils constituant la première et la deuxième préformes sont des fils de carbone. En variante, l'étape de renforcement de l'assemblage peut être réalisée par une technique d'épinglage en Z (« Z-pinning ») quel que soit le type de fils constituant les première et deuxième préformes.

On procède ensuite à la co-densification de la même manière que celle décrite en lien avec la figure 6.

Quel que soit l'exemple de procédé de fabrication de l'aube de turbomachine choisi, il peut y avoir après la co-densification une étape supplémentaire de mise en forme par exemple par réalisation de découpes et/ou une étape de réalisation de traitements de finition tels que le dépôt d'au moins un revêtement sur la surface de l'aube formée.

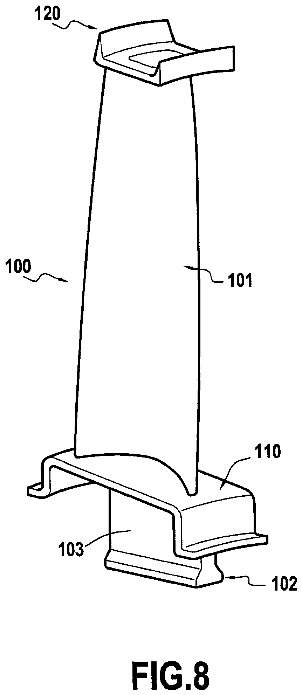

On a représenté à la figure 8 la structure d'une aube de turbomachine 100 qui peut être obtenue par mise en oeuvre du procédé selon l'invention. L'aube 100 de la figure 8 comprend de façon en soi bien connue, une pale 101, un pied 102 formé par une partie de plus forte épaisseur, par exemple à section en forme de bulbe, prolongé par une échasse 103, une plateforme intérieure 110 située entre l'échasse 103 et la pale 101 et une plateforme extérieure ou talon 120 au voisinage de l'extrémité libre de la pale. Le pied 102 peut être réalisé avec un matériau thermostructural de type composite à matrice céramique ou carbone/carbone. Il peut être avantageux que le renfort fibreux du pied 102 de l'aube 100 soit formé de fils de carbone, lesquels sont moins lourds que les fils de carbure de silicium, permettant ainsi d'alléger ainsi la masse globale de l'aube 100.

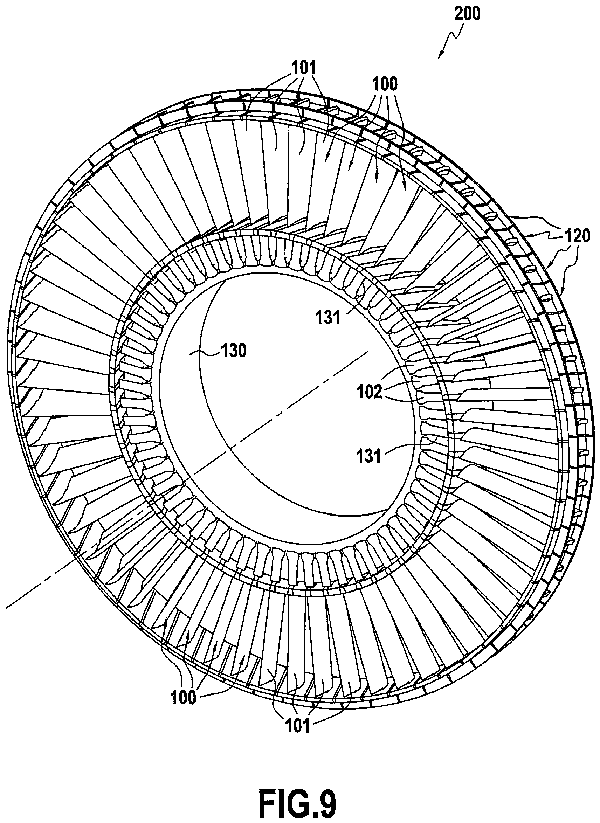

La figure 9 montre une roue 200 de turbomachine comprenant un moyeu 130 sur lequel sont montées une pluralité d'aubes 100 fabriquées par un procédé selon l'invention, chaque aube 100 comportant un pied 102 formé par une partie de plus forte épaisseur, par exemple à section en forme de bulbe, qui est engagée dans un logement correspondant 131 ménagé à la périphérie du moyeu 130 et une pale 101. La roue 200 comporte, en outre, plusieurs éléments de talon d'aube 120 présents sur chacune des aubes 100.

On peut fixer des aubes fabriquées par un procédé selon l'invention sur des turbines de turboréacteurs basse ou haute pression. Les aubes fabriquées par un procédé selon l'invention peuvent aussi équiper des turbines à gaz.

L'expression « compris(e) entre ... et ... » ou « allant de ... à ... » doit se comprendre comme incluant les bornes.

## Revendications

1. Procédé de fabrication d'une aube de turbomachine (100) en matériau composite comprenant un renfort fibreux densifié par une matrice, le procédé comprenant :
- la réalisation d'un tissage multicouche afin d'obtenir une première préforme fibreuse (1) en une seule pièce, ladite première préforme (1) comprenant une première partie (2) formant préforme de pied d'aube et prolongée par une deuxième partie (3) présentant une épaisseur inférieure à l'épaisseur de la première partie (2), ladite deuxième partie (3) formant préforme de tenon,
- la réalisation d'un tissage multicouche afin d'obtenir une deuxième préforme fibreuse (4 ; 14 ; 14') en une seule pièce, ladite deuxième préforme (4 ; 14 ; 14') comprenant une première partie (5 ; 15 ; 15') formée de deux peaux (5a ; 5b ; 15a ; 15b ; 15'a ; 15'b) délimitant entre elles un logement interne (6), ladite première partie (5 ; 15 ; 15') formant préforme de pale,
- l'assemblage de la première préforme (1) à l'état consolidé ou non consolidé avec la deuxième préforme (4 ; 14 ; 14') à l'état non consolidé par engagement de la deuxième partie (3) de la première préforme (1) dans le logement interne (6) de la première partie (5 ; 15 ; 15') de la deuxième préforme (4 ; 14 ; 14'), et
- la co-densification des première (1) et deuxième (4 ; 14 ; 14') préformes ainsi assemblées afin d'obtenir une aube de turbomachine (100), et
le procédé étant **caractérisé en ce que** la deuxième préforme (4 ; 14 ; 14') comprend au moins une deuxième partie (7 ; 17 ; 17') s'étendant depuis la surface externe desdites peaux (5a ; 5b ; 15a ; 15b ; 15'a ; 15'b), ladite au moins deuxième partie (7 ; 17 ; 17') formant préforme de plateforme.

2. Procédé selon la revendication 1, **caractérisé en ce que** la première préforme est consolidée avant l'étape d'assemblage et **en ce que** la première préforme à l'état consolidé est assemblée avec la deuxième préforme (4 ; 14 ; 14') à l'état non consolidé lors de l'étape d'assemblage.

3. Procédé selon la revendication 1, **caractérisé en ce que** la première préforme à l'état non consolidé est assemblée avec la deuxième préforme (4 ; 14 ; 14') à l'état non consolidé lors de l'étape d'assemblage.

4. Procédé selon l'une quelconque des revendications 1 à 3, **caractérisé en ce que** ladite au moins deuxième partie (17 ; 17') de la deuxième préforme (14 ; 14') formant préforme de plateforme est réalisée par tissage de deux ensembles de couches de fils (17a ; 17b ; 17'a ; 17'b) traversant chacun respectivement une des peaux (15a ; 15b ; 15'a ; 15'b) de la première partie (15 ; 15') de la deuxième préforme (14 ; 14') formant préforme de pale.

5. Procédé selon l'une quelconque des revendications 1 à 3, **caractérisé en ce que** ladite au moins deuxième partie (7) de la deuxième préforme (4) formant préforme de plateforme est réalisée par tissage de surlongueurs (7a ; 7b) dans la partie inférieure de la première partie (5) de ladite deuxième préforme (4) formant préforme de pale.

6. Procédé selon l'une quelconque des revendications 1 à 5, **caractérisé en ce qu'**il comprend, après l'étape de co-densification des première (1) et deuxième (4 ; 14 ; 14') préformes, une étape d'usinage de la préforme de pale (5 ; 15 ; 15') de manière à réduire l'épaisseur des peaux (5a ; 5b ; 15a ; 15b ; 15'a ; 15'b).

7. Procédé selon l'une quelconque des revendications 1 à 6, **caractérisé en ce que** la première préforme est obtenue après tissage multicouche d'une pluralité de fils de fibres de carbone et **en ce que** la deuxième préforme est obtenue après tissage multicouche d'une pluralité de fils de carbure de silicium.

8. Procédé selon la revendication 7, **caractérisé en ce que** la première préforme est consolidée par une phase de consolidation à base de carbone avant l'étape d'assemblage et **en ce que** la première préforme ainsi consolidée est assemblée avec la deuxième préforme à l'état non consolidé lors de l'étape d'assemblage.

9. Procédé selon l'une quelconque des revendications 1 à 8, **caractérisé en ce que** la co-densification des première (1) et deuxième (4 ; 14 ; 14') préformes est réalisée par mise en oeuvre de l'un au moins des procédés suivants : infiltration chimique en phase vapeur, densification par voie liquide et procédé d'infiltration à l'état fondu.

10. Procédé selon l'une quelconque des revendications 1 à 9, **caractérisé en ce qu'**il comprend, après l'étape d'assemblage des première et deuxième préformes fibreuses et avant la co-densification, une étape de renforcement de l'assemblage consistant à introduire ou former des liaisons mécaniques entre les première et deuxième préformes au niveau de leurs portions assemblées.

## Patentansprüche

1. Verfahren zur Herstellung einer Turbomaschinenschaufel (100) aus Verbundmaterial, umfassend eine matrixverdichtete Faserverstärkung, wobei das Verfahren umfasst:
- Herstellen einer mehrschichtigen Weberei, um eine erste faserige Vorform (1) in einem Stück zu erhalten, wobei die erste Vorform (1) einen ersten Teil (2) umfasst, der eine Vorform eines Schaufelfußes bildet und durch einen zweiten Teil (3) mit einer Dicke, die geringer ist als die Dicke des ersten Teils (2), verlängert ist, wobei der zweite Teil (3) eine Zapfenvorform bildet,
- Herstellen einer mehrschichtigen Weberei, um eine zweite faserige Vorform (4; 14; 14') in einem Stück zu erhalten, wobei die zweite Vorform (4; 14; 14') einen ersten Teil (5; 15; 15') umfasst, der aus zwei Schalen (5a; 5b; 15a; 15b; 15'a; 15'b) gebildet ist, die zwischen sich ein Innengehäuse (6) begrenzen, wobei der erste Teil (5; 15; 15') eine Blattvorform bildet,
- Zusammenbauen der ersten Vorform (1) im konsolidierten oder nicht konsolidierten Zustand mit der zweiten Vorform (4; 14; 14') im nicht konsolidierten Zustand durch Eingreifen des zweiten Teils (3) der ersten Vorform (1) in das Innengehäuse (6) des ersten Teils (5; 15; 15') der zweiten Vorform (4; 14; 14'), und
- Co-Verdichten der ersten (1) und zweiten (4; 14; 14') Vorform, die so zusammengesetzt sind, um eine Turbomaschinenschaufel (100) zu erhalten, und
wobei das Verfahren **dadurch gekennzeichnet ist, dass** die zweite Vorform (4; 14; 14') mindestens einen zweiten Teil (7; 17; 17') umfasst, der sich von der Außenfläche der Schalen (5a; 5b; 15a; 15b; 15'a; 15'b) erstreckt, wobei der mindestens zweite Teil (7; 17; 17') eine Plattform-Vorform bildet.

2. Verfahren gemäß Anspruch 1, **dadurch gekennzeichnet, dass** die erste Vorform vor dem Schritt des Zusammenbauens konsolidiert wird und dass die erste Vorform im konsolidierten Zustand mit der zweiten Vorform (4; 14; 14') im nicht konsolidierten Zustand während des Schrittes des Zusammenbauens zusammengebaut wird.

3. Verfahren gemäß Anspruch 1, **dadurch gekennzeichnet, dass** die erste Vorform im nicht konsolidierten Zustand mit der zweiten Vorform (4; 14; 14') im nicht konsolidierten Zustand während des Schrittes des Zusammenbauens zusammengebaut wird.

4. Verfahren gemäß einem der Ansprüche 1 bis 3, **dadurch gekennzeichnet, dass** der mindestens zweite Teil (17; 17') der zweiten Vorform (14; 14'), der eine Plattform-Vorform bildet, durch Weben von zwei Sätzen von Garnschichten (17a; 17b; 17'a; 17'b) hergestellt wird, die jeweils durch eine der Schalen (15a; 15b; 15'a; 15'b) des ersten Teils (15; 15'b) der zweiten Vorform (14; 14') verlaufen, der eine Blattvorform bildet.

5. Verfahren gemäß einem der Ansprüche 1 bis 3, **dadurch gekennzeichnet, dass** der mindestens zweite Teil (7) der zweiten Vorform (4), der eine Plattform-Vorform bildet, durch Weben von Überlängen (7a; 7b) in den unteren Teil des ersten Teils (5) der zweiten Vorform (4), der eine Blattvorform bildet, hergestellt wird.

6. Verfahren gemäß einem der Ansprüche 1 bis 5, **dadurch gekennzeichnet, dass** es nach dem Schritt des Co-Verdichtens der ersten (1) und zweiten (4; 14; 14') Vorform einen Schritt des Bearbeitens der Blattvorform (5; 15; 15') umfasst, um die Dicke der Schalen (5a; 5b; 15a; 15b; 15'a; 15'b) zu reduzieren.

7. Verfahren gemäß einem der Ansprüche 1 bis 6, **dadurch gekennzeichnet, dass** die erste Vorform nach mehrschichtigem Weben einer Mehrzahl von Kohlefasergarnen erhalten wird und dass die zweite Vorform nach mehrschichtigem Weben einer Mehrzahl von Siliziumkarbidgarnen erhalten wird.

8. Verfahren gemäß Anspruch 7, **dadurch gekennzeichnet, dass** die erste Vorform vor dem Schritt des Zusammenbauens durch eine kohlenstoffbasierte Konsolidierungsphase konsolidiert wird und dass die so konsolidierte erste Vorform mit der zweiten Vorform im nicht konsolidierten Zustand während des Schrittes des Zusammenbauens zusammengebaut wird.

9. Verfahren gemäß einem der Ansprüche 1 bis 8, **dadurch gekennzeichnet, dass** das Co-Verdichten der ersten (1) und der zweiten (4; 14; 14') Vorform durch Ausführen mindestens eines der folgenden Verfahren durchgeführt wird: chemisches Dampfphaseninfiltrieren, flüssiges Verdichten und Schmelzinfiltrationsverfahren.

10. Verfahren gemäß einem der Ansprüche 1 bis 9, **dadurch gekennzeichnet, dass** es nach dem Schritt des Zusammenbauens der ersten und zweiten faserigen Vorform und vor dem Co-Verdichten einen Schritt des Verstärkens der Anordnung durch Einführen oder Bilden mechanischer Bindungen zwischen der ersten und der zweiten Vorform an ihren zusammengesetzten Abschnitten umfasst.

## Claims

1. A method of fabricating a turbine engine blade (100) made of composite material comprising fiber reinforcement densified by a matrix, the method comprising:
- using multilayer weaving to make a first fiber preform (1) as a single piece, said first preform (1) having a first portion (2) forming a blade root preform and extended by a second portion (3) of thickness smaller than the thickness of the first portion (2), said second portion (3) forming a tenon preform;
- using multilayer weaving to make a second fiber preform (4; 14; 14') as a single piece, said second preform (4; 14; 14') comprising a first portion (5; 15; 15') made up of two skins (5a; 5b; 15a; 15b; 15'a; 15'b) defining between them an internal housing (6), said first portion (5; 15; 15') forming an airfoil preform;
- assembling the first preform (1) in the consolidated or non-consolidated state with the second preform (4; 14; 14') in the non-consolidated state by engaging the second portion (3) of the first preform (1) in the internal housing (6) of the first portion (5; 15; 15') of the second preform (4; 14; 14'); and
- co-densifying the first and second preforms (1 - 4; 14; 14') as assembled together in this way in order to obtain a turbine engine blade (100);
the method being **characterized in that** the second preform (4; 14; 14') comprises at least one second portion (7; 17; 17') extending from an outside surface of said skins (5a; 5b; 15a; 15b; 15'a; 15'b), said at least second portion (7; 17; 17') forming a platform preform.

2. A method according to claim 1, **characterized in that** the first preform is consolidated before the assembly step and **in that** the first preform in the consolidated state is assembled with the second preform (4; 14; 14') in the non-consolidated state during the assembly step.

3. A method according to claim 1, **characterized in that** the first preform in the non-consolidated state is assembled with the second preform (4; 14; 14') in the non-consolidated state during the assembly step.

4. A method according to any one of claims 1 to 3, **characterized in that** said at least second portion (17; 17') of the second preform (14; 14') forming a platform preform is made by weaving two sets of yarn layers (17a; 17b; 17'a; 17'b), each passing respectively through one of the skins (15a; 15b; 15'a; 15'b) of the first portion (15; 15') of the second preform (14; 14') forming the airfoil preform.

5. A method according to any one of claims 1 to 3, **characterized in that** said at least second portion (7) of the second preform (4) forming the platform preform is made by weaving extra length (7a; 7b) in the bottom portion of the first portion (5) of said second preform (4) forming the airfoil preform.

6. A method according to any one of claims 1 to 5, **characterized in that**, after the step of co-densifying the first and second preforms (1 - 4; 14; 14'), it includes a step of machining the airfoil preform (5; 15; 15') so as to reduce the thickness of the skins (5a; 5b; 15a; 15b; 15'a; 15'b).

7. A method according to any one of claims 1 to 6, **characterized in that** the first preform is obtained after multilayer weaving of a plurality of carbon fiber yarns, and **in that** the second preform is obtained after multilayer weaving of a plurality of silicon carbide yarns.

8. A method according to claim 7, **characterized in that** the first preform is consolidated by a carbon-based consolidation phase prior to the assembly step, and **in that** the first preform as consolidated in this way is assembled with the second preform in the non-consolidated state during the assembly step.

9. A method according to any one of claims 1 to 8, **characterized in that** the first and second preforms (1 - 4; 14; 14') are co-densified by performing at least one of the following methods: chemical vapor infiltration; densification by a liquid technique; a melt-infiltration technique.

10. A method according to any one of claims 1 to 9, **characterized in that**, after the step of assembling together the first and second fiber preforms and before co-densification, it includes a step of reinforcing the assembly, which step consists in introducing or forming mechanical bonds between the first and second preforms in their assembled-together portions.
